# EUROPÄISCHE PATENTSCHRIFT

(11) **EP 2 791 999 B1**
(45) Veröffentlichungstag und Bekanntmachung des Hinweises auf die Patenterteilung: **10.02.2016**
(21) Anmeldenummer: 12784288.8
(22) Anmeldetag: 15.11.2012
(51) Int. Cl.: H01M 2/06, H01M 2/34

(54) **BATTERIEZELLE, BATTERIE UND KRAFTFAHRZEUG**
BATTERY CELL, BATTERY AND ELECTRIC VECHICLE
CELLULE DE BATTERIE, BATTERIE ET VEHICULE

(30) Priorität: 13.12.2011 DE 102011088345
(43) Veröffentlichungstag der Anmeldung: 22.10.2014
(73) Patentinhaber: Robert Bosch GmbH, 70442 Stuttgart (DE); Samsung SDI Co., Ltd., Yongin-si Gyeonggi-do 446-577 (KR)
(72) Erfinder: KOHLBERGER, Markus, 70174 Stuttgart (DE); FETZER, Joachim, 73342 Bad-Ditzenbach (DE); FINK, Holger, 70567 Stuttgart (DE)
(74) Vertreter: Bee, Joachim
(86) Internationale Anmeldenummer: PCT/EP2012/072724
(87) Internationale Veröffentlichungsnummer: WO 2013/087343

(56) Entgegenhaltungen:
- EP-A1- 2 284 932
- US-A1- 2009 159 311
- US-A1- 2010 316 894

## Beschreibung

Die vorliegende Erfindung betrifft eine Batteriezelle, welche zwei Elektroden und ein Batteriezellengehäuse umfasst. Ferner betrifft die Erfindung eine Batterie mit einer Mehrzahl der erfindungsgemäßen Batteriezellen sowie ein Kraftfahrzeug mit der erfindungsgemäßen Batterie.

### Stand der Technik

In Fahrzeugen mit zumindest teilweisem elektrischen Antrieb kommen elektrische Energiespeicher zum Einsatz, um die elektrische Energie für den Elektromotor, welcher den Antrieb unterstützt bzw. als Antrieb dient, zu speichern. In den Fahrzeugen der neuesten Generation finden hierbei sogenannte Lithium-Ionen-Batterien Verwendung. Diese zeichnen sich unter anderem durch hohe Energiedichten und eine äußerst geringe Selbstentladung aus. Lithium-Ionen-Batteriezellen besitzen mindestens eine positive und eine negative Elektrode (Kathode bzw. Anode), die Lithium-Ionen (Li+) reversibel ein-(Interkalation) oder wieder auslagern (Deinterkalation) können.

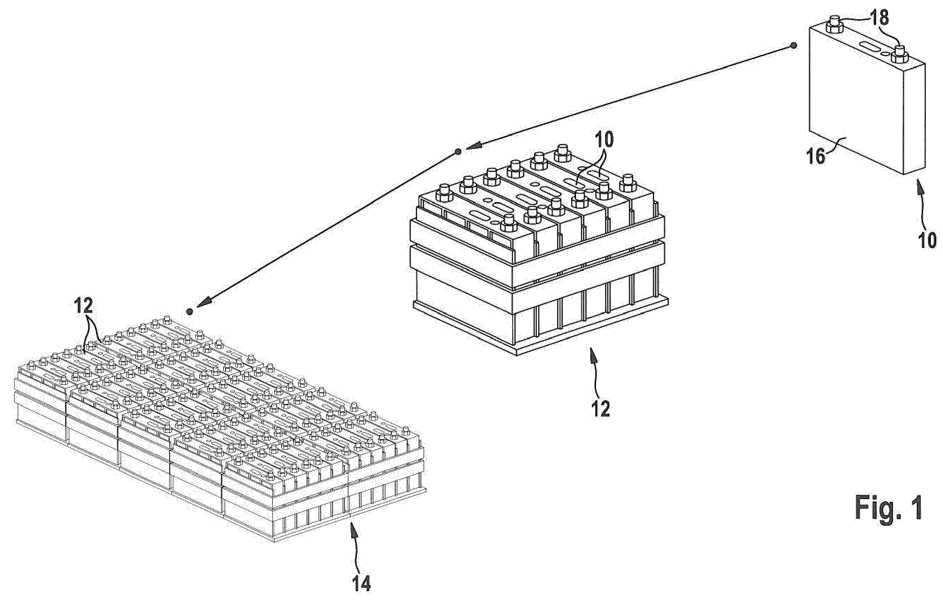

Figur 1 zeigt wie einzelne Batteriezellen 10, beispielsweise mit einem metallischen Batteriezellengehäuse 16, zu Batteriemodulen 12 und dann zu Batterien 14 zusammengefasst werden können. Dies erfolgt durch eine nicht dargestellte Parallel- oder Reihenschaltung der Pole, also der Elektroden 18 der Batteriezellen 10. Dabei besteht per Definition ein Batteriemodul 12 bzw. eine Batterie 14 aus mindestens zwei Batteriezellen 10, wobei die Begriffe Batterie 14 und Batteriemodul 12 oft synonym verwendet werden. Die elektrische Spannung einer Batterie 14 beträgt beispielsweise zwischen 120 und 600 Volt Gleichstrom.

Bei sogenannten Hardcasezellen, deren Batteriezellengehäuse aus einem festen Aluminium- oder Stahlblech besteht, ist üblicherweise eine der beiden Elektroden elektrisch leitfähig mit dem Batteriezellengehäuse verbunden, um zusätzliche Potentialunterschiede, die langfristig zu Korrosion des Batteriezellengehäuses führen können, zu vermeiden. Die andere Elektrode ist durch eine Dichtung elektrisch vom Batteriezellengehäuse getrennt.

Bei einem Störfall, z. B. durch mechanische Einwirkung bei einem Unfall eines batteriebetriebenen Fahrzeuges, kann die Isolation zwischen den Batteriezellen beschädigt werden. Die Tatsache, dass eine der Elektroden mit dem Batteriezellengehäuse verbunden ist, stellt nun ein Sicherheitsrisiko dar.

Die DE 197 14 847 A1 offenbart eine Schaltung und ein Verfahren, um eine negative Elektrode einer Batteriezelle mit dem Batteriezellengehäuse zu verbinden. Zwischen der negativen Elektrode und dem Zellengehäuse ist ein Widerstand vorgesehen, welcher mittels eines Signalgebers überwacht wird. Bei ungewolltem Kontakt der positiven Elektrode mit dem Zellengehäuse wird durch den Widerstand der Stromfluss begrenzt und vom Signalgeber ein Signal generiert.

### Offenbarung der Erfindung

Erfindungsgemäß wird eine Batteriezelle umfassend zwei Elektroden und ein Batteriezellengehäuse, welches beispielsweise aus Aluminium oder Stahl besteht, zur Verfügung gestellt. Für die folgenden Erläuterungen in diesem Dokument werden die Begriffe Elektrode und Batteriepol synonym verwendet. Kennzeichnend ist eine der beiden Elektroden, im Normalfall die negative Elektrode, über eine Sollbruchstelle mit dem Batteriezellengehäuse elektrisch leitfähig verbunden. Neben dieser elektrisch leitfähigen Verbindung sind die Elektroden lediglich über den Elektrolyten mit dem Batteriezellengehäuse verbunden, ansonsten insbesondere im Bereich der Durchführung der Elektroden durch das Batteriezellengehäuse, von diesem elektrisch isoliert. Das die Sollbruchstelle ausbildende Bauteil ist derart vorgespannt, dass sich bei einem Bruch der Sollbruchstelle durch das elastische Rückfedern des vorgespannten Bauteils ein Spalt zwischen den dabei entstehenden Bruchufern der Sollbruchstelle bildet. Damit die beiden Bruchufer der Sollbruchstelle nach dem Bruch sicher voneinander getrennt sind, ist es von Vorteil, wenn das die Sollbruchstelle ausbildende Bauteil derart vorgespannt ist, dass in der Sollbruchstelle vorwiegend Zugspannungen auftreten. Wird, beispielsweise bei einem Unfall eines mit der erfindungsgemäßen Batteriezelle betriebenen Fahrzeuges, das Batteriezellengehäuse deformiert, oder die Elektrode in Bezug auf das Batteriezellengehäuse verschoben, so bricht die Sollbruchstelle, wodurch die elektrisch leitfähige Verbindung zwischen Elektrode und Batteriezellengehäuse getrennt wird.

Die erfindungsgemäße Batteriezelle hat den Vorteil, dass im regulären Betrieb das Batteriezellengehäuse vor Korrosion geschützt ist. Durch die Trennung der elektrisch leitfähigen Verbindung zwischen Batteriezellengehäuse und Elektrode wird bei einem Schadensfall das Risiko eines Kurzschlusses verringert.

Bevorzugt wird die Sollbruchstelle durch eine Einkerbung gebildet. In diesem Fall sind beide Seiten der Sollbrauchstelle auf ein und demselben Bauteil, wobei die Einkerbung die Materialstärke an dieser Stelle des Bauteils so stark reduziert, dass dadurch die Sollbruchstelle entsteht.

Die Sollbruchstelle befindet sich bevorzugt auf der Außenseite des Batteriezellengehäuses, wodurch eine einfache Sichtprüfung genügt, um zu überprüfen, ob die elektrisch leitfähige Verbindung zwischen der Elektrode und dem Batteriezellengehäuse intakt ist.

Gemäß einer bevorzugten Ausführungsform der Erfindung ist die Sollbruchstelle zwischen einem Arm und einem Zapfen angeordnet. Der Arm und der Zapfen sind bei intakter Sollbruchstelle ein und dasselbe Bauteil. Dieses kann bevorzugt kostengünstig an einem Ende mit der Elektrode und an dem anderen Ende mit dem Batteriezellengehäuse verschweißt sein.

Der beim Brechen der Sollbruchstelle zwischen den beiden Bruchufern entstehende Spalt weist bevorzugt einen Mindestnormalabstand der beiden Bruchufer von 0,1 mm bis 2 mm auf, wodurch bei geringem Platzaufwand eine sichere elektrische Trennung gewährleistet ist.

Ferner bevorzugt ist die kleinste Querschnittsfläche der Sollbruchstelle weniger als 0,5 mm² groß, wodurch bereits bei geringen Deformationen des Batteriezellengehäuses die elektrisch leitfähige Verbindung unterbrochen wird.

Vorzugsweise ist die Batteriezelle eine Lithium-Ionen-Sekundärzelle. Durch die Verwendung der Lithium-Ionen-Technologie können besonders hohe Energiespeicherdichten erzielt werden, was besonders im Bereich der Elektromobilität zu weiteren Vorteilen führt.

Ferner wird eine Batterie umfassend eine Mehrzahl an erfindungsgemäßen Batteriezellen zur Verfügung gestellt.

Des Weiteren wird ein Kraftfahrzeug zur Verfügung gestellt, welches die erfindungsgemäße Batterie umfasst. Die Batterie ist in der Regel zur Speisung eines elektrischen Antriebssystems des Fahrzeuges vorgesehen.

Vorteilhafte Weiterbildungen der Erfindung sind in den Unteransprüchen angegeben und können der Beschreibung entnommen werden.

### Zeichnungen

Ausführungsbeispiele der Erfindung werden anhand der Zeichnungen und der nachfolgenden Beschreibung näher erläutert. Es zeigen:
Figur 1 eine Batteriezelle, ein Modul und eine Batterie,
Figur 2 eine elektrisch leitfähige Verbindung zwischen Elektrode und Batteriezellengehäuse,
Figur 3 eine unterbrochene Verbindung zwischen Elektrode und Batteriezellengehäuse, und
Figur 4 ein die Sollbruchstelle ausbildendes Bauteil.

Auf Figur 1 wurde bereits zur Erläuterung des Standes der Technik eingegangen.

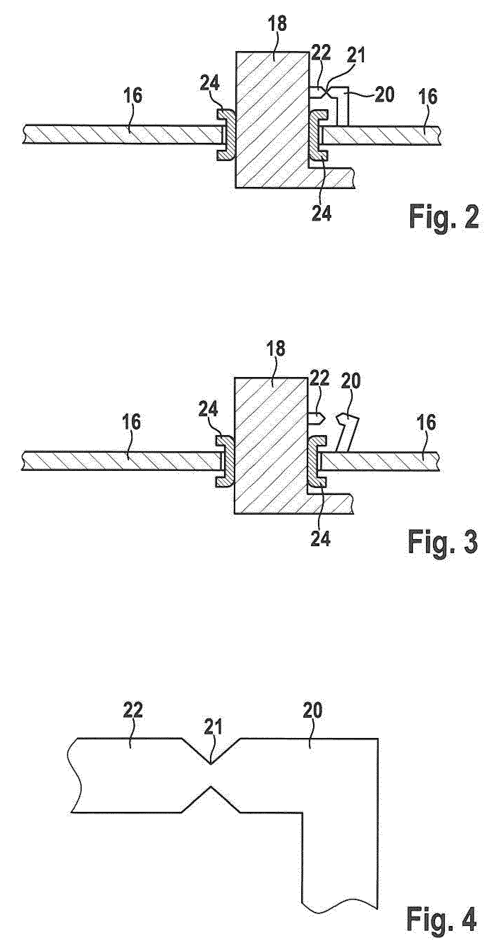

Figur 2 zeigt einen Teilbereich einer erfindungsgemäßen Batteriezelle 10 im Schnitt. Eine Elektrode 18 (Batteriepol), im Normalfall die negative Elektrode, wird durch das Batteriezellengehäuse 16 aus dem Inneren der Batteriezelle 10 nach außen geführt. Im Bereich der Durchführung ist die Elektrode 18 von dem Batteriezellengehäuse 16 durch einen elektrischen Isolator 24 elektrisch isoliert. Die elektrisch leitfähige Verbindung kann auf der Außenseite des Batteriezellengehäuses 16 über einen Arm 20 und einen Zapfen 22 realisiert sein, in deren Übergangsbereich sich die Sollbruchstelle 21 befindet. Wie in Figur 2 ersichtlich, ist die Sollbruchstelle 21 nicht gebrochen, so dass ein elektrischer Strom zwischen der Elektrode 18 und dem Batteriezellengehäuse 16 fließen kann.

Figur 3 zeigt denselben Teil der erfindungsgemäßen Batteriezelle 10 im Schnitt. Diesmal ist jedoch die Sollbruchstelle 21 bereits gebrochen, wodurch das ursprünglich die Sollbruchstelle 21 ausbildende Bauteil in den Arm 20 und den Zapfen 22 unterteilt wird. Beispielsweise bei einem Unfall des mit der Batteriezelle 10 betriebenen Fahrzeuges fand eine Relativbewegung zwischen der Elektrode 18 und dem Batteriezellengehäuse 16 statt, wodurch die Sollbruchstelle 21 brach. Der Arm 20 war bereits im normalen Betrieb gemäß Figur 2 derart vorgespannt, dass sich dieser nach dem Bruch der Sollbruchstelle 21 von dem Zapfen 22 entfernte. Dadurch bildete sich ein Luftspalt zwischen dem Zapfen 22 und dem Arm 20, wodurch kein elektrischer Strom mehr zwischen der Elektrode 18 und dem Batteriezellengehäuse 16 fließen kann. Es empfiehlt sich, das Innenleben der Batteriezelle 10 so auszuführen, dass dort bei einer Deformation des Batteriezellengehäuses 16 kein weiterer elektrisch leitfähiger Kontakt zwischen Elektrode 18 und Batteriezellengehäuse 16 entstehen kann.

Figur 4 zeigt ein die Sollbruchstelle 21 bildendes Bauteil, wie es bereits aus Figur 2 bekannt ist. Ist die Sollbruchstelle 21, wie abgebildet, nicht gebrochen, so sind der Arm 20 und der Zapfen 22 aus ein und demselben Bauteil ausgeformt. Dieses weist Einkerbungen auf, welche die Sollbruchstelle 21 bilden. Die kleinste Querschnittsfläche der Sollbruchstelle 21 ist neben einer möglichen Vorspannung des Armes 20 ausschlaggebend für die nötige Relativbewegung des Batteriezellengehäuses 16 zur damit verbundenen Elektrode 18, um die Sollbruchstelle 21 aufzubrechen. Ist die Querschnittsfläche zu klein dimensioniert, bricht die Sollbruchstelle 21 bereits bei kleinsten und somit harmlosen Relativbewegungen des Batteriezellengehäuses 16 auf. Ist die Querschnittsfläche jedoch zu groß dimensioniert, bricht die Sollbruchstelle 21 auch nicht bei großen Relativbewegungen oder Deformationen des Batteriezellengehäuses 16 und eine sichere elektrische Trennung der Elektrode 18 vom Batteriezellengehäuse 16 ist nicht gewährleistet.

## Patentansprüche

1. Batteriezelle (10) umfassend zwei Elektroden (18) und ein Batteriezellengehäuse (16), **dadurch gekennzeichnet, dass** eine der beiden Elektroden (18) über eine Sollbruchstelle (21) mit dem Batteriezellengehäuse (16) elektrisch leitfähig verbunden ist, und das die Sollbruchstelle (21) ausbildende Bauteil derart vorgespannt ist, dass sich bei einem Bruch der Sollbruchstelle (21) durch das elastische Rückfedern des vorgespannten Bauteils ein Spalt zwischen den dabei entstehenden Bruchufern der Sollbruchstelle (21) bildet.

2. Batteriezelle (10) nach Anspruch 1, wobei die Sollbruchstelle (21) durch eine Einkerbung gebildet wird.

3. Batteriezelle (10) nach einem der vorhergehenden Ansprüche, wobei sich die Sollbruchstelle (21) auf der Außenseite des Batteriezellengehäuses (16) befindet.

4. Batteriezelle (10) nach einem der vorhergehenden Ansprüche, wobei die Sollbruchstelle (21) zwischen einem Arm (20) und einem Zapfen (22) angeordnet ist.

5. Batteriezelle (10) nach einem der vorhergehenden Ansprüche, wobei der beim Brechen der Sollbruchstelle (21) zwischen den beiden Bruchufern entstehende Spalt einen Mindestnormalabstand der beiden Bruchufer von 0,1 mm bis 2 mm aufweist.

6. Batteriezelle (10) nach einem der vorhergehenden Ansprüche, wobei der kleinste Querschnitt der Sollbruchstelle weniger als 0,5 mm² beträgt.

7. Batteriezelle (10) nach einem der vorhergehenden Ansprüche, wobei die Batteriezelle (10) eine Lithium-Ionen-Sekundärzelle ist.

8. Batterie (14) umfassend eine Mehrzahl an erfindungsgemäßen Batteriezellen (10) nach einem der Ansprüche 1 bis 7.

9. Kraftfahrzeug umfassend eine Batterie (14) nach Anspruch 8.

## Claims

1. Battery cell (10) comprising two electrodes (18) and a battery cell housing (16), **characterized in that** one of the two electrodes (18) is electrically conductively connected to the battery cell housing (16) by means of a predetermined breaking point (21), and the component which forms the predetermined breaking point (21) is prestressed in such a way that, when the predetermined breaking point (21) breaks, a gap forms between the edges of the break of the predetermined breaking point (21), which are formed in the process, owing to the elastic resilience of the prestressed component.

2. Battery cell (10) according to Claim 1, wherein the predetermined breaking point (21) is formed by a notch.

3. Battery cell (10) according to either of the preceding claims, wherein the predetermined breaking point (21) is located on the outside of the battery cell housing (16).

4. Battery cell (10) according to one of the preceding claims, wherein the predetermined breaking point (21) is arranged between an arm (20) and a pin (22).

5. Battery cell (10) according to one of the preceding claims, wherein the gap which is produced between the two edges of the break when the predetermined breaking point (21) breaks has a minimum normal distance between the two edges of the break of 0.1 mm to 2 mm.

6. Battery cell (10) according to one of the preceding claims, wherein the smallest cross section of the predetermined breaking point is less than 0.5 mm².

7. Battery cell (10) according to one of the preceding claims, wherein the battery cell (10) is a lithium-ion secondary cell.

8. Battery (14) comprising a plurality of battery cells (10) as per the invention according to one of Claims 1 to 7.

9. Motor vehicle comprising a battery (14) according to Claim 8.

## Revendications

1. Cellule de batterie (10) comprenant deux électrodes (18) et un boîtier de cellule de batterie (16), **caractérisée en ce qu'**une des deux électrodes (18) est reliée de façon électriquement conductrice au boîtier de cellule de batterie (16) par un point de rupture désigné (21), et le composant formant le point de rupture désigné (21) est précontraint, de telle manière qu'il se forme, lors d'une rupture du point de rupture désigné (21), une fente entre les rives de rupture ainsi formées du point de rupture désigné (21), en raison du rappel élastique du composant précontraint.

2. Cellule de batterie (10) selon la revendication 1, dans laquelle le point de rupture désigné (21) est formé par une encoche.

3. Cellule de batterie (10) selon l'une quelconque des revendications précédentes, dans laquelle le point de rupture désigné (21) se trouve sur le côté extérieur du boîtier de cellule de batterie (16).

4. Cellule de batterie (10) selon l'une quelconque des revendications précédentes, dans laquelle le point de rupture désigné (21) est situé entre un bras (20) et un tenon (22).

5. Cellule dee batterie (10) selon l'une quelconque des revendications precedentes, dans laquelle la fente apparue entre les deux rives de rupture lors de la rupture du point de rupture désigné (21) présente une distance normale minimale entre les deux rives de rupture de 0,1 mm à 2 mm.

6. Cellule de batterie (10) selon l'une quelconque des revendications précédentes, dans laquelle la plus petite section transversale du point de rupture désigné vaut moins de 0,5 mm².

7. Cellule de batterie (10) selon l'une quelconque des revendications précédentes, dans laquelle la cellule de batterie (10) est une cellule secondaire lithium-ions.

8. Batterie (14) comprenant une multiplicité de cellules de batterie conformes à l'invention (10) selon l'une quelconque des revendications 1 à 7.

9. Véhicule à moteur comprenant une batterie (14) selon la revendication 8.
